# EUROPÄISCHE PATENTANMELDUNG

(11) **EP 3 425 247 A1**
(43) Veröffentlichungstag der Anmeldung: **09.01.2019**
(21) Anmeldenummer: 17465529.0
(22) Anmeldetag: 07.07.2017
(51) Int. Cl.: F16K 11/07, F02M 26/70, F02M 26/71

(54) **VENTIL ZUR MISCHUNG ZWEIER GASSTRÖME**

(71) Anmelder: Continental Automotive GmbH, 30165 Hannover (DE)
(72) Erfinder: Soptica, Silviu, 307220 Giroc, Timisoara (RO)

(57) **Zusammenfassung**

Die Erfindung betrifft ein Ventil (1) zur Vermischung zweier Gasströme, mit einem Gehäuse (11), mit einem ersten Gaseintritt (2), mit einem zweiten Gaseintritt (3) und mit einem Gasaustritt (4), wobei die Gaseintritte (2, 3) fluidisch mit dem Gasaustritt (4) verbunden sind, wobei dem ersten Gaseintritt (2) nachgelagert ein Leitelement (5) angeordnet ist, welches innerhalb des Gehäuses (11) verschiebbar gelagert ist, wobei durch das Verschieben des Leitelementes (5) ein Strömungsquerschnitt einer Überströmöffnung (6) für das Überströmen des durch den ersten Gaseintritt (2) einströmenden Gasvolumens hin zum Gasaustritt (4) durch das Leitelement (5) regulierbar ist.

## Beschreibung

### Technisches Gebiet

Die Erfindung betrifft ein Ventil zur Vermischung zweier Gasströme, mit einem Gehäuse, mit einem ersten Gaseintritt, mit einem zweiten Gaseintritt und mit einem Gasaustritt, wobei die Gaseintritte fluidisch mit dem Gasaustritt verbunden sind.

### Stand der Technik

Zur Vermischung zweier Gasströme, beispielsweise in Abgasrückführungssystemen, werden Ventile eingesetzt. Zu den bekannten Bauformen gehören Ventile, die eine drehbare Drosselklappe aufweisen, die über einen Elektromotor verdreht werden kann, einfache pneumatische An/Aus Ventile oder elektromagnetische betätigte Ventile.

Allen diesen bekannten Ventilen ist gemein, dass sie entweder einen komplexen Aufbau aufweisen, wodurch sie kostenintensiv sind oder eine nur unzureichend genaue Regelung zwischen dem Zustand vollständig geöffnet und vollständig geschlossen zulassen, sofern eine solche Regelung überhaupt vorgesehen ist.

### Darstellung der Erfindung, Aufgabe, Lösung, Vorteile

Daher ist es die Aufgabe der vorliegenden Erfindung ein Ventil zu schaffen, welches einen einfachen Aufbau aufweist und zuverlässig eine Vermischung von zwei Gasströmen in beliebigen Verhältnissen ermöglicht.

Die Aufgabe hinsichtlich des Ventils wird durch ein Ventil mit den Merkmalen von Anspruch 1 gelöst.

Ein Ausführungsbeispiel der Erfindung betrifft ein Ventil zur Vermischung zweier Gasströme, mit einem Gehäuse, mit einem ersten Gaseintritt, mit einem zweiten Gaseintritt und mit einem Gasaustritt, wobei die Gaseintritte fluidisch mit dem Gasaustritt verbunden sind, wobei dem ersten Gaseintritt nachgelagert ein Leitelement angeordnet ist, welches innerhalb des Gehäuses verschiebbar gelagert ist, wobei durch das Verschieben des Leitelementes ein Strömungsquerschnitt einer Überströmöffnung für das Überströmen des durch den ersten Gaseintritt einströmenden Gasvolumens hin zum Gasaustritt durch das Leitelement regulierbar ist.

Das Leitelement ist derart gestaltet, dass es von dem aus dem ersten Gaseintritt einströmenden Gasstrom durchströmbar ist. Eine Gasströmung um das Leitelement ist durch Dichtelemente beziehungsweise eine passgenaue Führung im Gehäuse ausgeschlossen. Das Leitelement ist beweglich im Gehäuse gelagert, so dass durch das Aufbringen einer Kraft auf das Leitelement eine Verschiebung des Leitelementes realisierbar ist. Durch die Bewegung des Leitelementes kann ein Strömungsquerschnitt, beispielsweise eine Öffnung im Leitelement, freigegeben werden, so dass ein Gasstrom vom ersten Gaseintritt durch das Leitelement hin zum Gasaustritt strömen kann.

Besonders vorteilhaft ist es, wenn durch das Leitelement der Strömungsquerschnitt für das Überströmen des durch den zweiten Gaseintritt einströmenden Gasvolumens hin zum Gasaustritt regulierbar ist. Dies ist besonders vorteilhaft, da durch ein einziges Leitelement sowohl der Gasstrom aus dem ersten Gaseintritt beeinflusst werden kann als auch der Gasstrom aus dem zweiten Gaseintritt. Dies kann beispielsweise vorteilhaft realisiert werden durch das Einschieben des Leitelementes in die dem zweiten Gaseintritt nachgelagerte Strömungsstrecke, wodurch die Strömungsstrecke zumindest teilweise blockiert wird. Somit wird der Massenstrom verringert. In einer Extremposition kann das Leitelement auch die Strömungsstrecke vom zweiten Gaseintritt zum Gasaustritt vollständig verschließen und nur die Gasströmung von ersten Gaseintritt hin zum Gasaustritt ermöglichen. Durch eine solche Funktionalität wäre ermöglicht, dass gezielt nur Gas aus dem ersten Gaseintritt oder Gas aus dem zweiten Gaseintritt zum Gasaustritt strömen würde, oder eine Gasströmung in einem beliebigen Verhältnis aus den beiden Gasströmen zum Gasaustritt strömen würde.

Auch ist es vorteilhaft, wenn das Leitelement hülsenartig ausgebildet ist und die dem ersten Gaseintritt nachgelagerte Strömungstrecke vollständig fluiddicht verschließt. Ein hülsenartiges Leitelement kann besonders einfach in einem rohrförmigen Gehäuseabschnitt gelagert und relativ zu diesem verschoben werden. Weiterhin ist eine Hülse mit einer definierten Überströmöffnung besonders einfach herzustellen.

Ein bevorzugtes Ausführungsbeispiel ist dadurch gekennzeichnet, dass das Leitelement eine Überströmöffnung an seinem radialen Randbereich aufweist. Das Leitelement weist die Überströmöffnung besonders vorteilhaft an einem radialen Wandbereich auf, da der radiale Wandbereich in zumindest einer Stellung des Leitelementes an den Innenwandungen der dem ersten Gaseintritt nachgelagerten Strömungsstrecke anliegt. Ein Überströmen des Gases aus dem ersten Gaseintritt wird in dieser Stellung verhindert. Wird das Leitelement entsprechend weit verschoben, so dass die Überströmöffnung in einen Bereich des Ventils hineinragt, in dem die Überströmöffnung nicht mehr von der Innenwandung der Strömungsstrecke nach dem ersten Gaseintritt verschlossen ist, kann ein Gasstrom durch das Leitelement und insbesondere durch die Überströmöffnung hin zum Gasaustritt strömen.

Auch ist es zu bevorzugen, wenn dem ersten Gaseintritt eine erste Strömungsstrecke nachgelagert ist, entlang welcher das Leitelement verschiebbar ist, wobei das Leitelement zumindest teilweise in eine dem zweiten Gaseintritt nachgelagerte zweite Strömungsstrecke und/oder eine dem Gasaustritt vorgelagerte dritte Strömungsstrecke hinein bewegbar ist.

Durch das Hineinbewegen des Leitelementes in die zweite oder die dritte Strömungsstrecke wird erreicht, dass die Überströmöffnung nicht mehr vollständig oder überhaupt nicht mehr von der Innenwandung der ersten Strömungsstrecke überdeckt wird und somit ein Gasstrom durch das Leitelement hindurchströmen kann.

Darüber hinaus ist es vorteilhaft, wenn das Gehäuse einen T-förmigen Querschnitt aufweist, wobei ein erster Schenkel die erste Strömungsstrecke bildet, ein zweiter Schenkel die zweite Strömungsstrecke bildet und ein dritter Schenkel die dritte Strömungsstrecke hin zum Gasaustritt bildet. Eine T-förmige Gestalt ist besonders vorteilhaft, da dort die Strömungsstrecken, die den Gaseintritten nachgelagert beziehungsweise dem Gasaustritt vorgelagert sind, sich kreuzen und somit auf einfache Weise eine Mischstelle erzeugt wird. Darüber hinaus kann ein aus einem der Strömungsstrecken in die Mischstelle hineinragendes Leitelement auch den Strömungsquerschnitt der anderen Strömungsstrecken beeinflussen.

Weiterhin ist es vorteilhaft, wenn die Überströmöffnung von der die erste Strömungsstrecke begrenzenden Wandung verschlossen wird, solange das Leitelement nicht ausreichend weit in die zweite Strömungsstrecke oder dritte Strömungsstrecke hineinragt. Dies ist vorteilhaft, um alleine durch die Verschiebung des Leitelementes relativ zur ersten Strömungsstrecke ein Verschließen beziehungsweise Öffnen der Überströmöffnung realisieren zu können.

Auch ist es zweckmäßig, wenn das Ventil in einer ersten Stellung ein Überströmen des Gasvolumens aus dem ersten Gaseintritt und ein Überströmen des Gasvolumens aus dem zweiten Gaseintritt hin zum Gasaustritt erlaubt, wobei das Überströmen des Gasvolumens aus dem ersten Gaseintritt durch die freigegebene Querschnittsfläche der Überströmöffnung reguliert wird und das Überströmen des Gasvolumens aus dem zweiten Gaseintritt durch die von dem hülsenförmigen Leitelement nicht blockierte Querschnittsfläche der zweiten Strömungsstrecke und/oder der dritten Strömungsstrecke reguliert wird. Durch das Einschieben des Leitelementes in die zweite und/oder dritte Strömungsstrecke kann der Strömungsquerschnitt der Strömungsstrecken verkleinert werden, wodurch auf die durch die jeweilige Strömungsstrecke strömende Gasmenge Einfluss genommen werden kann. In einer Extremposition kann auch eine der beiden Strömungsstrecken, in welche das Leitelement eingeschoben wird, vollständig verschlossen werden.

Darüber hinaus ist es vorteilhaft, wenn zwischen dem hülsenartigen Leitelement und der die erste Strömungsstrecke begrenzenden Wandung zumindest ein Dichtmittel vorgesehen ist, wodurch ein Umströmen des Leitelementes vermieden wird. Dies ist vorteilhaft, um unerwünschte Gasströmungen vom ersten Gaseintritt zum Gasaustritt zu vermeiden.

Weiterhin ist es zweckmäßig, wenn ein außerhalb des Gehäuses angeordneter Aktuator auf das Leitelement einwirkt, wobei die Kraftübertragung von dem Aktuator auf das Leitelement durch eine Führungsstange erfolgt, die durch die zweite und/oder dritte Strömungsstrecke ragt und mit dem Leitelement auf der dem ersten Gaseintritt abgewandten Seite verbunden ist. Ein Aktuator kann beispielsweise ein Schrittmotor oder ein sonstiger Elektromotor sein, der das Leitelement translatorisch in der ersten Strömungsstrecke verschieben kann.

Auch ist es vorteilhaft, wenn das Leitelement im Inneren eine Leitstruktur aufweist, die den in das Leitelement einströmenden Gasstrom hin zur Überströmöffnung lenkt. Besonders vorteilhaft weist das Leitelement eine innere Formgebung auf, die den Gasstrom vom Eintritt in das Leitelement hin zur Überströmöffnung lenkt. Hierdurch können zusätzlich Druckverluste infolge des Leitelementes vermieden werden.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine schematische Schnittansicht eines erfindungsgemäßen Ventils,
- Fig. 2: eine Schnittansicht durch eine erfindungsgemäßes Ventil, wobei eine Stellung des Leitelementes gezeigt ist, in der das Überströmen vom ersten Gaseintritt zum Gasaustritt verhindert wird, und
- Fig. 3: eine Schnittansicht entsprechend der Figur 2, wobei das Leitelement derart verschoben ist, dass ein Überströmen aus dem ersten Gaseintritt hin zum Gasaustritt durch die Überströmöffnung ermöglicht ist.

### Bevorzugte Ausführung der Erfindung

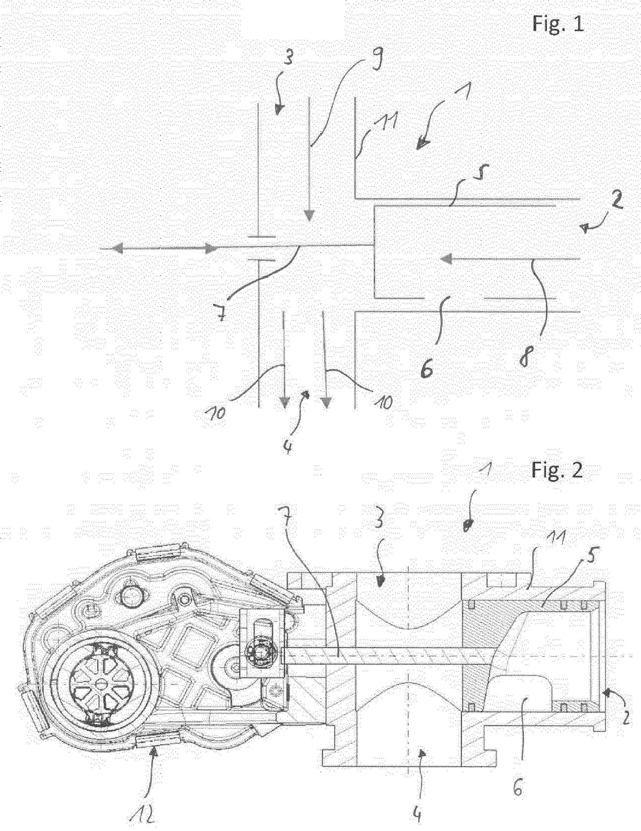

Die Figur 1 zeigt eine schematische Ansicht eines Ventils 1 mit einem ersten Gaseintritt 2, einem zweiten Gaseintritt 3 und einem Gasaustritt 4. Die Gaseintritte 2, 3 sind fluidisch mit dem Gasaustritt 4 verbunden. Dem Gaseintritt 2 ist ein Leitelement 5 nachgelagert, welches als Hülse ausgeformt ist und die erste Strömungsstrecke vollständig verschließt. Das Leitelement 5 weist eine Überströmöffnung 6 in einer radialen Wandung auf, die von der Innenwandung der ersten Strömungsstrecke überdeckt wird.

Gas kann entlang der Pfeile 8, 9 durch die Gaseintritte 2, 3 einströmen und nach einer Vermischung entlang der Pfeile 10 aus dem Gasaustritt 4 ausströmen.

Das Leitelement 5 ist über eine Führungsstange 7 mit einem nicht gezeigten Aktuator außerhalb des Gehäuses 11 des Ventils 1 verbunden und kann von dem Aktuator translatorisch entlang der ersten Strömungsstrecke bewegt werden.

Wie in der schematische Darstellung der Figur 1 bereits zu erkennen ist, wird die Überströmöffnung 6 in einer ersten Stellung des Leitelementes 5 vollständig von den die erste Strömungsstrecke begrenzenden Wandungen überdeckt, wodurch ein Durchströmen der Überströmöffnung 6 effektiv verhindert wird.

Wenn das Leitelement 5 weit genug nach links verschoben wird, wird die Überströmöffnung 6 freigegeben, wodurch ein Überströmen hin zum Gasaustritt 4 stattfinden kann. Abhängig von der Länge der Bewegung, kann die Überströmöffnung 6 teilweise oder vollständig freigegeben werden, wodurch die tatsächlich überströmende Gasmenge reguliert werden kann.

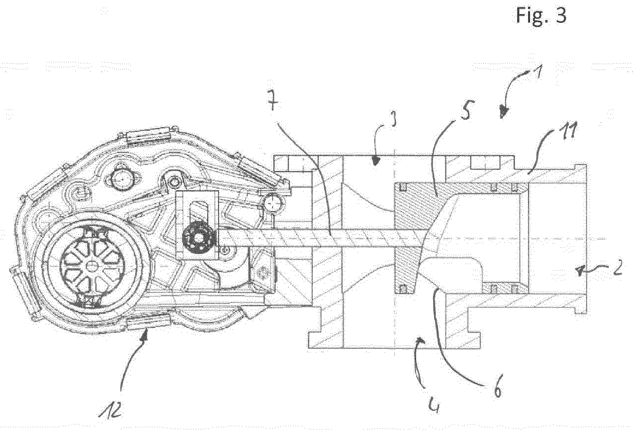

Die nachfolgenden Figuren 2 und 3 zeigen ein der schematischen Abbildung in Figur 1 entsprechendes Ventil 1 in einer möglichen Ausgestaltung. Die Bezugszeichen werden zur einfachen Nachvollziehbarkeit für gleiche Teile beibehalten.

Figur 2 zeigt ein Ventil 1 wie in Figur 1 angedeutet in einer seitlichen Schnittansicht. Links am Gehäuse 11 ist ein Aktuator 12 gezeigt, der zur Bewegung des Leitelementes 5 genutzt wird.

Die Strömungsstrecken, die den Gaseintritten 2, 3 nachgelagert und dem Gasaustritt 4 vorgelagert sind, sind rohrförmig gestaltet und schneiden sich in einem gemeinsamen Punkt. In Figur 2 ist das Leitelement 5 vollständig in der ersten Strömungsstrecke positioniert und verschließt somit die Überströmöffnung 6. Der Gaseintritt 2 ist somit vollständig blockiert, weswegen nur Gas aus dem zweiten Gaseintritt 3 hin zum Gasaustritt 4 strömen kann.

Durch das Einfahren des Leitelementes 5 in den Mischpunkt wird der aktive Strömungsquerschnitt der zweiten Strömungsstrecke, welche dem zweiten Gaseintritt 3 nachgelagert ist, verkleinert. Gleichzeitig wird die Überströmöffnung 6 zumindest teilweise geöffnet, wodurch auch ein Gasstrom vom ersten Gaseintritt 2 hin zum Gasaustritt 4 strömen kann.

Figur 3 zeigt das Ventil 1 der Figur 2, wobei das Leitelement 5 in Figur 3 in die zweite Strömungsstrecke hinein verschoben ist, wodurch die Überströmöffnung 6 zumindest teilweise freigegeben wird. Gleichzeitig wird der Strömungsquerschnitt nach dem zweiten Gaseintritt 2 verkleinert.

In der Stellung, die in Figur 3 gezeigt ist, können Gasströme von beiden Gaseintritten 2, 3 zum Gasaustritt 4 strömen. Je nach dem freigegebenen Öffnungsquerschnitt der Überströmöffnung 6 und dem nicht blockierten Strömungsquerschnitt der zweiten Strömungsstrecke, wird eine Mischung aus beiden Gasströmen erzeugt.

Die Ausführungsbeispiele der Figuren 1 bis 3 weisen insbesondere keinen beschränkenden Charakter auf und dienen der Verdeutlichung des Erfindungsgedankens.

## Patentansprüche

1. Ventil (1) zur Vermischung zweier Gasströme, mit einem Gehäuse (11), mit einem ersten Gaseintritt (2), mit einem zweiten Gaseintritt (3) und mit einem Gasaustritt (4), wobei die Gaseintritte (2, 3) fluidisch mit dem Gasaustritt (4) verbunden sind, **dadurch gekennzeichnet, dass** dem ersten Gaseintritt (2) nachgelagert ein Leitelement (5) angeordnet ist, welches innerhalb des Gehäuses (11) verschiebbar gelagert ist, wobei durch das Verschieben des Leitelementes (5) ein Strömungsquerschnitt einer Überströmöffnung (6) für das Überströmen des durch den ersten Gaseintritt (2) einströmenden Gasvolumens hin zum Gasaustritt (4) durch das Leitelement (5) regulierbar ist.

2. Ventil (1) nach Anspruch 1, **dadurch gekennzeichnet, dass** durch das Leitelement (5) der Strömungsquerschnitt für das Überströmen des durch den zweiten Gaseintritts (3) einströmenden Gasvolumens hin zum Gasaustritt (4) regulierbar ist.

3. Ventil (1) nach einem der vorhergehenden Ansprüche, **dadurch gekennzeichnet, dass** das Leitelement (5) hülsenartig ausgebildet ist und die dem ersten Gaseintritt (2) nachgelagerte Strömungstrecke vollständig fluiddicht verschließt.

4. Ventil (1) nach einem der vorhergehenden Ansprüche, **dadurch gekennzeichnet, dass** das Leitelement (5) die Überströmöffnung (6) an seinem radialen Randbereich aufweist.

5. Ventil (1) nach einem der vorhergehenden Ansprüche, **dadurch gekennzeichnet, dass** dem ersten Gaseintritt (2) eine erste Strömungsstrecke nachgelagert ist, entlang welcher das Leitelement (5) verschiebbar ist, wobei das Leitelement (5) zumindest teilweise in eine dem zweiten Gaseintritt (3) nachgelagerte zweite Strömungsstrecke und/oder eine dem Gasaustritt (4) vorgelagerte dritte Strömungsstrecke hinein bewegbar ist.

6. Ventil (1) nach einem der vorhergehenden Ansprüche, **dadurch gekennzeichnet, dass** das Gehäuse (11) einen T-förmigen Querschnitt aufweist, wobei ein erster Schenkel die erste Strömungsstrecke bildet, ein zweiter Schenkel die zweite Strömungsstrecke bildet und ein dritter Schenkel die dritte Strömungsstrecke hin zum Gasaustritt (4) bildet.

7. Ventil (1) nach einem der vorhergehenden Ansprüche, **dadurch gekennzeichnet, dass** die Überströmöffnung (6) von der die erste Strömungsstrecke begrenzenden Wandung verschlossen wird, solange das Leitelement (5) nicht ausreichend weit in die zweite Strömungsstrecke oder dritte Strömungsstrecke hineinragt.

8. Ventil (1) nach einem der vorhergehenden Ansprüche, **dadurch gekennzeichnet, dass** das Ventil (1) in einer ersten Stellung ein Überströmen des Gasvolumens aus dem ersten Gaseintritt (2) und ein Überströmen des Gasvolumens aus dem zweiten Gaseintritt (3) hin zum Gasaustritt (4) erlaubt, wobei das Überströmen des Gasvolumens aus dem ersten Gaseintritt (2) durch die freigegebene Querschnittsfläche der Überströmöffnung (6) reguliert wird und das Überströmen des Gasvolumens aus dem zweiten Gaseintritt (3) durch die von dem hülsenförmigen Leitelement (5) nicht blockierte Querschnittsfläche der zweiten Strömungsstrecke und/oder der dritten Strömungsstrecke reguliert wird.

9. Ventil (1) nach einem der vorhergehenden Ansprüche, **dadurch gekennzeichnet, dass** zwischen dem hülsenartigen Leitelement (5) und der die erste Strömungsstrecke begrenzenden Wandung zumindest ein Dichtmittel vorgesehen ist, wodurch ein Umströmen des Leitelementes (5) vermieden wird.

10. Ventil (1) nach einem der vorhergehenden Ansprüche, **dadurch gekennzeichnet, dass** ein außerhalb des Gehäuses (11) angeordneter Aktuator (12) auf das Leitelement (5) einwirkt, wobei die Kraftübertragung von dem Aktuator (12) auf das Leitelement (5) durch eine Führungsstange (7) erfolgt, die durch die zweite und/oder dritte Strömungsstrecke ragt und mit dem Leitelement (5) auf der dem ersten Gaseintritt (2) abgewandten Seite verbunden ist.

11. Ventil (1) nach einem der vorhergehenden Ansprüche, **dadurch gekennzeichnet, dass** das Leitelement (5) im Inneren eine Leitstruktur aufweist, die den in das Leitelement (5) einströmenden Gasstrom hin zur Überströmöffnung (6) lenkt.
